# EUROPÄISCHE PATENTSCHRIFT

(11) **EP 3 511 198 B1**
(45) Veröffentlichungstag und Bekanntmachung des Hinweises auf die Patenterteilung: **09.08.2023**
(21) Anmeldenummer: 18020516.3
(22) Anmeldetag: 19.10.2018
(51) Int. Cl.: B60L 53/16

(54) **LADESTECKER FÜR EINE LADESÄULE UND LADESÄULE MIT EINEM SOLCHEN STECKER**
CHARGING CONNECTOR FOR A CHARGING STATION AND CHARGING STATION WITH SUCH A CONNECTOR
FICHE DE CHARGE POUR UNE COLONNE DE CHARGE ET COLONNE DE CHARGE DOTÉ D'UNE TELLE FICHE

(30) Priorität: 16.01.2018 DE 102018100828
(43) Veröffentlichungstag der Anmeldung: 17.07.2019
(73) Patentinhaber: Dr.Ing. h.c. F. Porsche Aktiengesellschaft, 70435 Stuttgart (DE)
(72) Erfinder: Götz, Stefan, 85659 Forstern (DE); Reber, Volker, 74544 Michelbach a. d. Bilz (DE); Rönfanz, Jari, 75417 Mühlacker (DE); Kiefer, Michael, 70563 Stuttgart (DE)

(56) Entgegenhaltungen:
- WO-A1-2017/198798
- DE-A1-102012 214 685
- DE-A1-102013 007 330
- DE-A1-102015 100 347
- DE-A1-102016 206 300
- DE-T5-112014 004 814
- US-A- 1 685 608
- US-A- 6 123 569
- US-A1- 2013 169 226
- US-A1- 2014 084 678
- US-B1- 9 843 130

## Beschreibung

Die vorliegende Erfindung betrifft einen Ladestecker für eine Ladesäule. Die vorliegende Erfindung betrifft ferner eine entsprechende Ladesäule.

### Stand der Technik

Als Ladestation wird in der Elektrotechnik jedwede stationäre Vorrichtung oder elektrische Anlage bezeichnet, welche dazu dient, mobilen akkubetriebenen Geräten, Maschinen oder Kraftfahrzeugen durch einfaches Einstellen oder Einstecken Energie zuzuführen, ohne den Energiespeicher - etwa die Traktionsbatterie eines Elektroautos - entnehmen zu müssen. Ladestationen für Elektroautos werden umgangssprachlich auch als "Stromtankstellen" bezeichnet und können mehrere Ladepunkte umfassen, die je nach Bauform als "Ladesäulen" charakterisiert werden.

Bekannt sind hier insbesondere auf Gleichstrom (*direct current,* DC) basierende Schnellladesysteme (*high performance charging,* HPC) wie das in Europa verbreitete sogenannte kombinierte Ladesystem (*combined charging system,* CCS). Beim gattungsmäßigen Gleichstromladen wird Gleichstrom aus der Ladesäule direkt in das Fahrzeug eingespeist und hierzu durch einen leistungsstarken Gleichrichter vom Stromnetz oder durch große Pufferakkumulatoren an Solartankstellen bereitgestellt. Im Fahrzeug befindet sich ein Batteriemanagementsystem, das mit der Ladesäule kommuniziert, um die Stromstärke anzupassen oder bei Erreichung einer Kapazitätsgrenze den Vorgang zu beenden.

Die hierzu erforderliche Leistungselektronik ist nach dem Stand der Technik üblicherweise in der Ladesäule integriert und bis zu einer Leistungsgrenze von 50 kW belastbar. Da die Gleichstromanschlüsse der Ladesäule direkt mit entsprechenden Anschlüssen der Traktionsbatterie verbunden werden, lassen sich so verlustarm hohe Ladeströme übertragen, was kurze Ladezeiten ermöglicht, jedoch auch hohe Anforderungen an den Ladestecker stellt.

Insbesondere bei hohen Ladeströmen von mehr als 250 A sind die erforderlichen Kabel und Kupferleiter sehr dick, unflexibel und weisen minimal mögliche Biegeradien auf. Aus diesem Grund sind gattungsmäßige Ladestecker meist sehr unhandlich. Der Stecker wird zwar nahezu horizontal gesteckt und das Kabel tendiert dazu, aufgrund seines Gewichtes senkrecht zum Boden zu gelangen; allerdings besitzen bekannte Stecker meist einen sehr begrenzten Austrittswinkel des Kabels: Entweder ist der Winkel steil, allerdings mit der Folge, dass der Stecker groß, unhandlich und schlecht zu greifen wird, um den Biegeradius zum Stecker zu ermöglichen, oder der Stecker ist filigran und handlich - mit zu flachem Winkel.

DE112014002324T5 offenbart eine Haltestruktur für ein Anschlussteil. Ein abgeschirmtes Kabel, das aus einer Anschluss-Aufnahmekammer herausgeführt wird, wird hier durch das Anbringen einer Schutzabdeckung an einer Abschirmungsplatte im rechten Winkel gebogen und dann über einen Draht-Auslassöffnungsabschnitt herausgeführt. Eine Gummikappe wird in dem Draht-Auslassöffnungsabschhitt installiert, und das abgeschirmte Kabel tritt durch einen Innenraum der Gummikappe hindurch, wodurch verhindert wird, dass das abgeschirmte Kabel zu stark gebogen wird.

DE19650097C2 betrifft einen Ladestecker für ein Elektroauto mit Zuführungsleitungen und zwei Leitungssicherungszapfen. Da diese aus entgegengesetzten Richtungen auf die Zuführungsleitungen drücken, sind letztere in einem gebogenen Zustand selbst gesichert, und wenn Zugspannung auf das Kabel wirkt, hebt der Reibungswiderstand die auftretende Zugspannung auf.

DE102013019882A1 schließlich erörtert Ladekabel, welche endseitig einen Ladekabelstecker vorsehen und mit unterschiedlichen Leitungsquerschnitten ausgeführt sind. Hieraus ergibt sich, dass die Außendurchmesser der Ladekabel stark variieren. Um eine definierte Führung der Ladekabel aus dem Ladekabelstecker zu gewährleisten, wird . die Kontur des Ladekabelsteckers und insbesondere die an dem Stecker-Gehäuse vorgesehene Ladekabelanschlussöffnung an den jeweiligen Außendurchmesser angepasst.

DE 10 2012 214685 A1 offenbart einen Ladestecker, der sich für eine Ladesäule eignet. Der Ladestecker umfasst einen Kontaktträger und eine Gehäuseschale mit einem Griffbereich und einem Kanal, der in den Kontaktträger mündet.

US 6 123 569 A offenbart ebenfalls einen Ladestecker für eine Ladesäule. Der Ladestecker umfasst einen Kontaktträger und eine Gehäuseschale mit zwei in den Kontaktträger mündenden Kanälen, die unterschiedlich stark gebogen sind.

### Offenbarung der Erfindung

Die Erfindung stellt einen Ladestecker für eine Ladesäule sowie eine entsprechende Ladesäule gemäß dem unabhängigen Anspruch bereit.

Ein Vorzug des vorgeschlagenen Steckers liegt in seiner besonderen Handlichkeit. Erfindungsgemäß sind hierzu die Einzelleiter des Ladesteckers wie Leistungskabel, Signalkabel und Schutzleiter (*protective earth,* PE) in mindestens zwei Bündel aufgeteilt: Ein Bündel wird vorzugsweise von jenen Leitern mit hohem Biegeradius gebildet; ein weiteres Bündel wird ausschließlich von Leitern mit ausreichender Flexibilität gebildet.

Der Stecker erhält mindestens zwei Führungen oder Tunnel, über die die Leiter vom.Pin-Teil zum Kabel geführt werden. Der Tunnel der vor allem unflexiblen Leiter wird mit relativ hohem Biegeradius geführt. Die flexibleren Leiter können zum Teil dort mitgeführt werden, vorwiegend verlaufen sie allerdings durch einen weiteren Kanal, der stärkere Biegungen aufweist.

In der Mitte kann eine Öffnung vorgesehen sein. In der Folge entstehen zwei relativ dünne Segmente, die sehr gut als Griff genutzt werden können.

Bei CCS-Steckern sind die DC-Leiter, die besonders hohe Ströme führen können, praktischerweise unterhalb der Signal- und Steuerleitungen angeordnet, sodass der Kanal mit größerem Biegeradius unten liegen kann und keine Überkreuzung von Leitern nötig ist. Sollten die Leistungskontakte bei anderen Stecker-Typen oberhalb der Signal- und Steuerleitungen angeordnet sein, kann jedoch eine Überkreuzung vorliegen, bei der vorzugsweise die Leistungskabel auf dem kürzesten Weg geführt und die flexiblen Leitungen so um die Leistungsleiter gelegt werden, dass sie ihren Kanal ebenfalls erreichen.

Für einen universellen Stecker-Entwurf kann der eigentliche Steckerteil als Wechselteil ausgestaltet werden, um in Kombination mit gleichartigen Grundbausteinen durch einen bloßen Wechsel des eigentlichen Stecker-Teiles Ländervarianten bilden zu können.

Weitere vorteilhafte Ausgestaltungen der Erfindung sind in den abhängigen Patentansprüchen angegeben.

### Kurze Beschreibung der Zeichnungen

Ein Ausführungsbeispiel der Erfindung ist in den Zeichnungen dargestellt und wird im Folgenden näher beschrieben.
Figur 1 zeigt die perspektivische Ansicht eines ersten Gleichstromladesteckers.
Figur 2 zeigt einen Teilschnitt des ersten Gleichstromladesteckers.
Figur 3 zeigt die Seitenansicht eines zweiten Gleichstromladesteckers.
Figur 4 zeigt einen ersten Teilschnitt des zweiten Gleichstromladesteckers.
Figur 5 zeigt eine Draufsicht des zweiten Gleichstromladesteckers.
Figur 6 zeigt einen zweiten Teilschnitt des zweiten Ladesteckers.

### Ausführungsformen der Erfindung

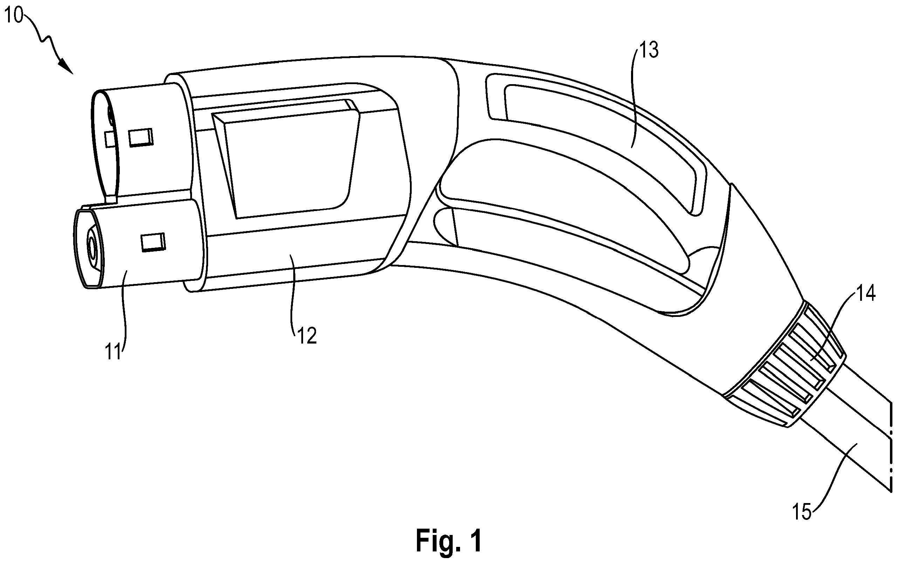

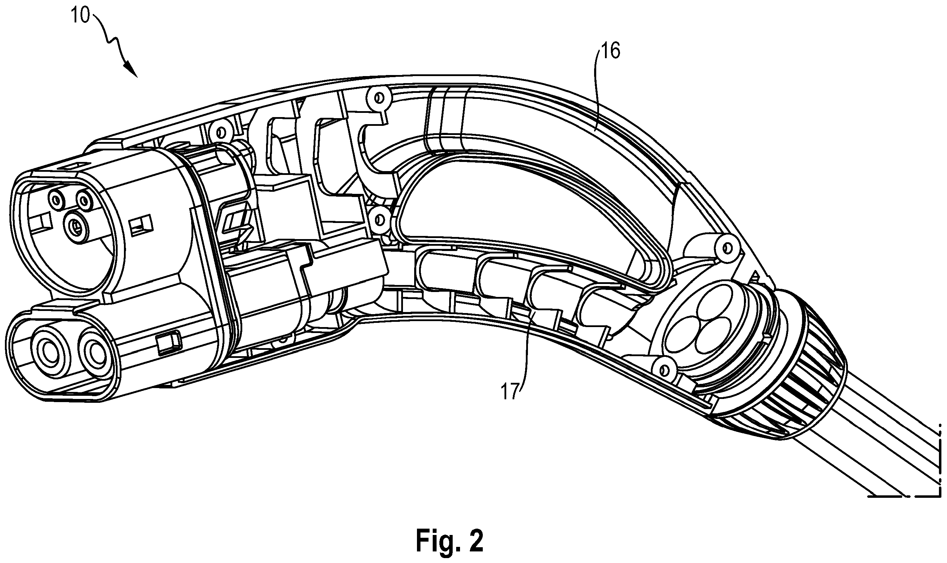

Figur 1 illustriert den grundlegenden Aufbau eines Ladesteckers (10) für die - in ihrer Gesamtheit nicht zeichnerisch dargestellte - Ladesäule einer Stromtankstelle. In zunächst weitgehend herkömmlicher Anordnung weist der Ladestecker (10) einen als Isolierkörper ' ausgeführten Kontaktträger (11), eine zweiteilige Gehäuseschale (12) mit einem dem Kontaktträger (11) abgewandten Griffbereich (13) sowie ein über eine Kabelaufnahme (14) in die Gehäuseschale (12) mündendes Kabel (15) auf. Bereits die abbildungsgemäße Öffnung des Ladesteckers (10) zwischen dem besonders schmal geformten Griffbereich (13) und einem weiteren Segment lässt jedoch zwei getrennte Leitungskanäle erahnen, die nunmehr anhand des Teilschnittes der Figur 2 erläutert seien,

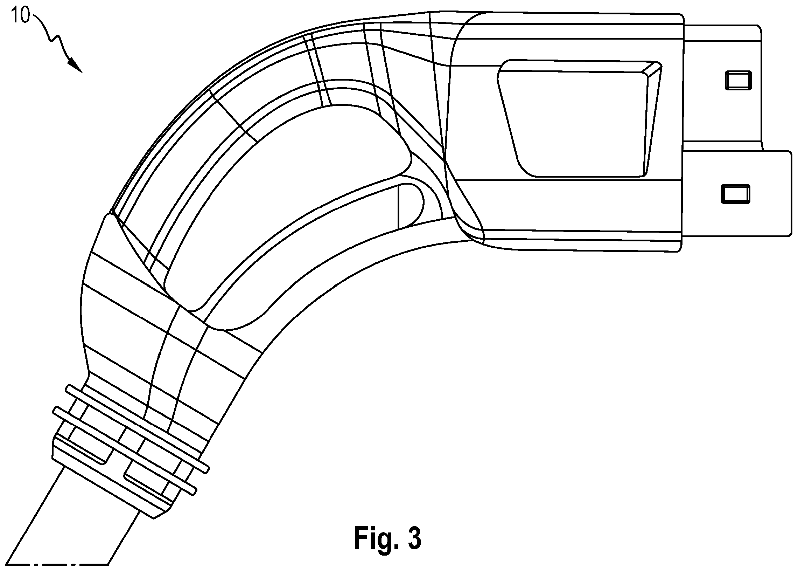

Erkennbar sind hier ein erster, den Griffbereich (13) durchziehender und deutlich gebogener Kanal für flexible Leitungen sowie ein = zur Aufnahme unflexibler Leistungsleiter mit hohem Biegeradius - lediglich sanft gekrümmter zweiter Kanal (17) der Gehäuseschale (12), die beide in den Kontaktträger (11) münden. Wie insbesondere Figur 3 verdeutlicht, ermöglicht diese Kanalführung trotz hoher Kabelquerschnitte auch eine deutlich stärkere Krümmung des gesamten Ladesteckers (10), was wiederum einen steileren Austrittswinkel des Kabels (15) insgesamt gestattet.

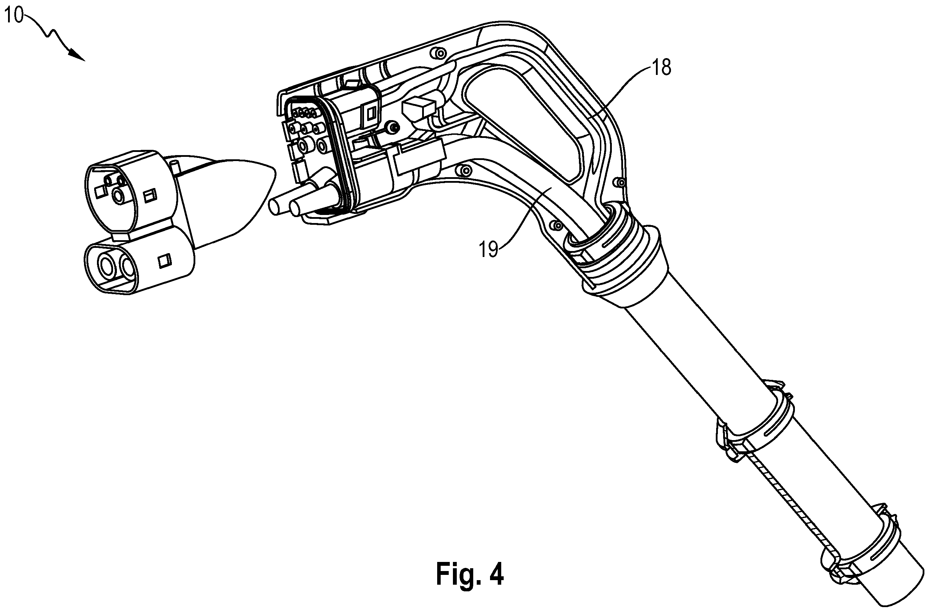

Figur 4 gibt einen denkbaren Verlauf der Steuer- und Schutzleitungen (18) sowie Gleichstromleitungen (19) des Kabels (15) durch den ersten Kanal (16) bzw. zweiten Kanal (17) der Gehäuseschale (12) wieder. Während Steuer- und Schutzleitungen (18) in der Regel einen Leitungsquerschnitt unter 25 qmm aufweisen, fällt der Querschnitt der Gleichstromleitungen (19) mitunter deutlich größer äus. In Betracht kommt im Falle der Gleichstromleitungen (19) ferner deren mögliche Kühlung und Isolation, welche ihren Gesamtquerschnitt und ihre Steifigkeit mitunter noch deutlich erhöhen mag.

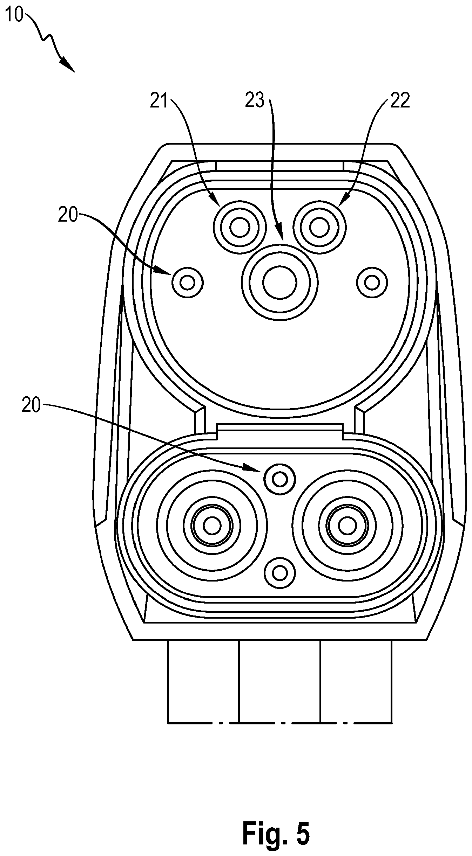

Die Anschlussbelegung des vorliegend dem Typ 2 entsprechenden Ladesteckers (10) ist in Figur 5 dokumentiert. Als Steuer- und Schutzleitungen (18) sind hier ein erster Signalleiter (21) für den Steuerpilotkontakt (*control* pilot, CP), ein zweiter Signalleiter (22) für den Näherungspilotkontakt (*proximity pilot,* PP) sowie ein ebenfalls in den Kontaktträger (11) mündender Schutzleiter (23) vorgesehen. Die dargestellte Konfiguration zeigt den Ladestecker (10) hierbei ohne Kontaktträger (11) vollständig montiert; letzterer lässt sich anschließend - vorliegend durch Verschraubung (20) an vier Y-förmig angeordneten Punkten - mit geringem Montageaufwand an der Gehäuseschale (12) befestigen.

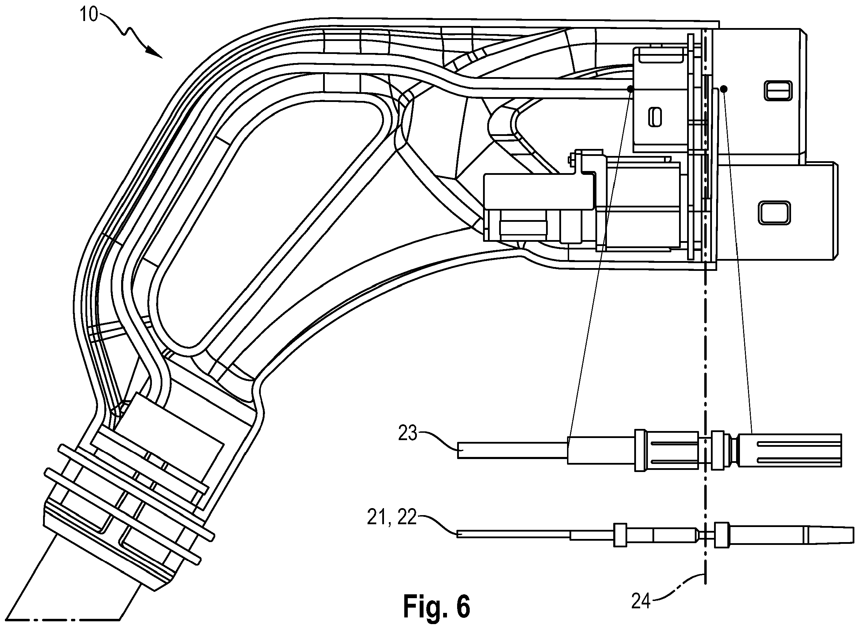

Figur 6 beleuchtet den Verlauf der auf diese Weise zwischen Kontaktträger (11) und Gehäuseschale (12) definierten Trennebene (24): Beispielhaft anhand des Schutzleiters (23) wird so die mögliche Kontakttrennung bei Abnahme des Kontaktträgers (11) verdeutlicht.

## Patentansprüche

1. Ladestecker (10) für eine Ladesäule, mit folgenden Merkmalen:
- der Ladestecker (10) umfasst einen Kontaktträger (11), eine Gehäuseschale (12), einen Griffbereich (13) eine Kabelaufnahme (14) und ein Kabel (15),
- die Gehäuseschale (12) weist einen ersten Kanal (16) und einen zweiten Kanal (17) auf, die jeweils in den Kontaktträger (11) münden und
- das Kabel (15) mündet über die Kabelaufnahme (14) und über die beiden Kanäle (16,17) der Gehäuseschale (12) in dem Kontaktträger (11) und umfasst Steuer- und Schutzleitungen (18), **gekennzeichnet durch** folgende Merkmale:
- das Kabel umfasst ferner Gleichstromleitungen (19) zur Übertragung der Ladeleistung, deren Flexibilität gegenüber der Steuer- und Schutzleitungen (18) niedriger ist,
- der erste Kanal (16) und der zweite Kanal (17) verlaufen getrennt voneinander und bilden in der Mitte der beiden Kanäle eine Öffnung der Ladesteckerschale (12), so dass der erste Kanal (16) zusammen mit der Öffnung einen Griff bildet,
- der erste Kanal (16) durchzieht den Griffbereich (13) und ist stärker gebogen als der zweite Kanal (17),
- die Steuer- und Schutzleitungen (18) verlaufen durch den ersten Kanal
- (16) und
- die Gleichstromleitungen (19) verlaufen durch den zweiten Kanal (17).

2. Ladestecker (10) nach Anspruch 1,
**gekennzeichnet durch** folgende Merkmale:
- der Ladestecker (10) weist eine Verschraubung (20) auf und
- die Verschraubung (20) verbindet den Kontaktträger (11) mit der Gehäuseschale (12).

3. Ladestecker (10) nach einem der Ansprüche 1 bis 2,
**gekennzeichnet durch** folgende Merkmale:
- die Steuer- und Schutzleitungen (18) umfassen einen Steuerpilot- ' Signalleiter (21) und
- der Steuerpilot-Signalleiter (21) mündet in den Kontaktträger (11).

4. Ladestecker (10) nach einem der Ansprüche 1 bis 3,
**gekennzeichnet durch** folgende Merkmale:
- die Steuer- und Schutzleitungen (18) umfassen einen Näherungspilot-Signalleiter (22) und
- der Näherungspilot-Signalleiter (22) mündet in den Kontaktträger (11).

5. Ladestecker (10) nach einem der Ansprüche 1 bis 4,
**gekennzeichnet durch** folgende Merkmale:
- die Steuer- und Schutzleitungen (18) umfassen einen Schutzleiter (23) und
- der Schutzleiter (23) mündet in den Kontaktträger (11).

6. Ladestecker (10) nach einem der Ansprüche 1 bis 5,
**gekennzeichnet durch** folgende Merkmale:
- die Leitungen (18, 19) sind in einer gemeinsamen Trennebene (24) trennbar ausgeführt und
- die Trennebene (24) verläuft zwischen dem Kontaktträger (11) und der Gehäuseschale (12).

7. Ladesäule mit einem Ladestecker (10) nach einem der Ansprüche 1 bis 6.

## Claims

1. Charging plug (10) for a charging station,
having the following features:
- the charging plug (10) comprises a contact carrier (11), a housing shell (12), a handle region (13), a cable receptacle (14), and a cable (15),
- the housing shell (12) comprises a first channel (16) and a second channel (17), each opening into the contact carrier (11), and
- the cable (15) opens via the cable receptacle (14) and via the two channels (16, 17) of the housing shell (12) in the contact carrier (11) and comprises control and grounding wires (18), **characterised by** the following features:
- the cable further comprises DC power lines (19) for transmitting the charging power, the flexibility of which is lower than the control and grounding wires (18),
- the first channel (16) and the second channel (17) run separately from one another and form an opening of the charging plug shell (12) in the middle of the two channels such that the first channel (16), together with the opening, forms a handle,
- the first channel (16) crosses through, the handle region (13) and is more strongly curved than the second channel (17),
- the control and grounding wires (18) run through the first channel (16), and
- the DC power lines (19) run through the second channel (17).

2. The charging plug (10) according to claim 1,
**characterised by** the following features:
- the charging plug (10) comprises a screwing (20), and
- the screwing (20) connects the contact carrier (11) to the housing shell (12).

3. The charging plug (10) according to any one of claims 1 to 2,
**characterised by** the following features:
- the control and grounding wires (18) comprise a control pilot signal conductor (21), and
- the control pilot signal conductor (21).opens into the contact carrier (11).

4. The charging plug (10) according to any one of claims 1 to 3,
**characterised by** the following features:
- the control and grounding wires (18) comprise a proximity pilot signal conductor (22), and
- the proximity pilot signal conductor (22) opens into the contact carrier (11).

5. The charging plug (10) according to any one of claims 1 to 4,
**characterised by** the following features:
- the control and grounding wires (18) comprise a grounding conductor (23), and
- the grounding conductor (23) opens into the contact carrier (11).

6. The charging plug (10) according to any one of claims 1 to 5,
**characterised by** the following features:
- the wires (18, 19) are configured so as to be separable in a common separation plane (24), and
- the separation plane (24) runs between the contact carrier (11) and the housing shell (12).

7. A charging station with a charging plug (10) according to any one of claims 1 to 6.

## Revendications

1. Fiche de recharge (10) pour une borne de recharge, présentant les particularités suivantes :
- la fiche de recharge (10) comprend un support de contacts (11), une coque formant boîtier (12), une zone de préhension (13), une arrivée de câble (14) et un câble (15),
- la coque formant boîtier (12) présente un premier canal (16) et un deuxième canal (17), qui débouchent respectivement dans le support de contacts (11), et
- le câble (15) débouche dans le support de contacts (11) en passant par l'arrivée de câble (14) et par les deux canaux (16, 17) de la coque formant boîtier (12) et comporte des lignes de commande et de protection (18) ; **caractérisée par** les particularités suivantes :
- le câble comprend en outre des lignes de courant continu (19) pour transmettre la puissance de recharge, de moindre flexibilité par rapport aux lignes de commande et de protection (18),
- le premier canal (16) et le deuxième canal (17) s'étendent séparément l'un de l'autre et forment, au milieu des deux canaux, une ouverture de la coque (12) de la fiche de recharge, de telle manière que le premier canal (16) formé une poignée, conjointement avec l'ouverture,
- le premier canal (16) traverse la zone de préhension (13) et présente une courbure plus forte que le deuxième canal (17),
- les lignes de commande et de protection (18) passent par le premier canal (16), et
- les 'lignes de courant continu (19) passent par le deuxième canal (17).

2. Fiche de recharge (10) selon la revendication 1, **caractérisée par** les particularités suivantes :
- la fiche de recharge (10) présente un raccord vissé (20), et
- le raccord vissé (20) relie le support de contacts (11) à la coque formant boîtier (12).

3. Fiche de recharge (10) selon l'une des revendications 1 et 2, **caractérisée par** les particularités suivantes :
- les lignes de commande et de protection (18) comprennent une ligne de signalisation de pilote de commande (21), et
- la ligne de signalisation de pilote de commande (21) débouche dans le support de contacts (11).

4. Fiche de recharge (10) selon l'une des revendications 1 à 3, **caractérisée par** les particularités suivantes :
- les lignes de commande et de protection (18) comprennent une ligne de signalisation de pilote de proximité (22), et
- la ligne de signalisation de pilote de proximité (22) débouche dans le support de contacts (11).

5. Fiche de recharge (10) selon l'une des revendications 1 à 4, **caractérisée par** les particularités suivantes :
- les lignes de commande et de protection (18) comprennent un conducteur de protection (23), et
- le conducteur de protection (23) débouche dans le support de contacts (11).

6. Fiche de recharge (10) selon l'une des revendications 1 à 5, **caractérisée par** les particularités suivantes :
- les lignes (18, 19) sont conçues séparables dans un plan de séparation (24) commun, et
- le plan de séparation (24) s'étend entre le support de contacts (11) et la coque formant boîtier (12).

7. Borne de recharge comportant une fiche de recharge (10) selon l'une des revendications 1 à 6.
